(19)

Europäisches
Patentamt

European
Patent Office

Office européen
des brevets

(11) **EP 2 325 968 A1**

(12) **EUROPEAN PATENT APPLICATION**

(43) Date of publication:
**25.05.2011 Bulletin 2011/21**

(51) Int Cl.:
***H02J 3/24*** (2006.01)

(21) Application number: **09176283.1**

(22) Date of filing: **18.11.2009**

| | |
|---|---|
| (84) Designated Contracting States:<br>**AT BE BG CH CY CZ DE DK EE ES FI FR GB GR**<br>**HR HU IE IS IT LI LT LU LV MC MK MT NL NO PL**<br>**PT RO SE SI SK SM TR**<br>Designated Extension States:<br>**AL BA RS**<br><br>(71) Applicant: **ABB Research Ltd.**<br>**8050 Zürich (CH)**<br><br>(72) Inventors:<br>• **Korba, Petr**<br>**5300 Turgi (CH)** | • **Berggren, Bertil**<br>**72476 Västeras (SE)**<br>• **Majumder, Rajat**<br>**72344 Västeras (SE)**<br>• **Ray, Swakshar**<br>**Guilderland, NY 12084 (US)**<br><br>(74) Representative: **ABB Patent Attorneys**<br>**C/o ABB Schweiz AG**<br>**Intellectual Property (CH-LC/IP)**<br>**Brown Boveri Strasse 6**<br>**5400 Baden (CH)** |

(54) **Tuning a power oscillation damping unit**

(57)    The invention is related to a method, power control device and computer program product for tuning a power oscillation damping unit (22; 26) in a power transmission system. The power control device (10) includes a probing signal generating element (42) configured to generate at least one probing signal (PS) and send the probing signal into the power transmission system, a data extracting element (36) configured to receive probing signal responses (PSR1, PSR2, PSRn) from measurement units (12, 14, 16) placed in the power transmission system and a system parameter determining element (40) configured to determine system model parameters (SP1; SP2) of the power transmission system based on the probing signal and the probing signal responses and tune the power oscillation damping unit using the system model parameters.

FIG. 1

EP 2 325 968 A1

**Description**

FIELD OF THE INVENTION

The invention relates to the field of wide area control of an electric power transmission system. The invention more particularly concerns a method, power control device and computer program product for tuning a power oscillation damping unit in a power transmission system.

BACKGROUND OF THE INVENTION

In the wake of the ongoing deregulations of the electric power markets, load transmission and wheeling of power from distant generators to local consumers has become common practice. As a consequence of the competition between power producing companies and the emerging need to optimize assets, increased amounts of electric power are transmitted through the existing networks, frequently causing congestions due to transmission bottlenecks. Transmission bottlenecks are typically handled by introducing transfer limits on transmission interfaces. This improves system security.

However it also implies that more costly power production has to be connected while less costly production is disconnected from a power grid. Thus, transmission bottlenecks have a substantial cost to the society. If transfer limits are not respected, system security is degraded which may imply disconnection of a large number of customers or even complete blackouts in the event of credible contingencies.

The underlying physical cause of transmission bottlenecks is often related to the dynamics of the power system. A number of dynamic phenomena need to be avoided in order to certify sufficiently secure system operation, such as loss of synchronism, voltage collapse and growing electromechanical oscillations. In this regard, electrical power transmission systems are highly dynamic and require control and feedback to improve performance and increase transfer limits.

For instance in relation to unwanted electromechanical oscillations that occur in parts of the power network, these oscillations generally have a frequency of less than a few Hz and are considered acceptable as long as they decay fast enough. They are initiated by e.g. normal changes in the system load or switching events in the network possibly following faults, and they are a characteristic of any power system. These oscillations are also often called Inter-area modes of oscillation since they are typically caused by a group of machines in one geographical area of the system swinging against a group of machines in another geographical area of the system. Insufficiently damped oscillations may occur when the operating point of the power system is changed, for example, due to a new distribution of power flows following a connection or disconnection of generators, loads and/or transmission lines. In these cases, an increase in the transmitted power of a few MW may make the difference between stable oscillations and unstable oscillations which have the potential to cause a system collapse or result in loss of synchronism, loss of interconnections and ultimately the inability to supply electric power to the customer. Appropriate monitoring and control of the power transmission system can help a network operator to accurately assess power transmission system states and avoid a total blackout by taking appropriate actions such as the connection of specially designed oscillation damping equipment.

There is thus a need for damping such inter area mode oscillations. This type of power oscillation damping is for instance described in "Application of FACTS Devices for Damping of Power System Oscillations", by R. Sadikovic et al., proceedings of the Power Tech conference 2005, June 27-30, St. Petersburg RU.

Damping may be performed by a power oscillation damping unit based on local measurements of system properties, i.e. on system properties measured close to the location where the required damping is determined and also performed or be based on measurements in various areas of the system. The first type of damping is often denoted local power oscillation damping, while the latter case is normally termed wide area power oscillation damping.

In order for a power oscillation damping unit to be efficient, the unit performing the damping has consider the system in which it is provided in order to contribute to system stability. This could be done using extensive knowledge of the particular power transmission system and/or a mathematical model capturing the dynamics of the system

It may thus be advantageous to use a system model and for setting parameters of the power oscillation damping unit using the knowledge of the system model. How a system model can be determined using subspace identification is for instance described by N. Zhou, J.W. Pierre, and J.F Hauer in "Initial Results in Power System Identification From Injected Probing Signals Using a Subspace Method", IEEE Trans on Power Systems, Vol. 21. No.3, August 2006. Another way is to use Kalman filtering, which is for instance described in EP 1 489 714, as well as by P. Korba, M. Larsson, B. Chaudhuri, B. Pal, R. Majumder, R. Sadikovic and G. Andersson in "Towards Real-time Implementation of Adaptive Damping Controllers for FACTS Devices", IEEE Power Engineering Society General Meeting, 2007.

The latter document also describes how such a model is used in the adaptive control of a power oscillation damping controller.

However, even when a power oscillation damping unit is set according to the principles mentioned above and initially functions well for a certain operating condition. It may have to be tuned because the power transmission system in question or neighbouring power transmission systems are changing and have different operating conditions. This is not so easy to do, especially if there is no or insufficient knowledge of the power transmission system or neighbouring systems

There is therefore a need for an improvement on this situation.

SUMMARY OF THE INVENTION

It is therefore an objective of the invention to improve damping in a power transmission system when the system has been subjected to change in operating conditions,

A change in operating conditions may involve a change in load pattern and power generation pattern but may also involve a change in network configuration, like introduction or removal of controllable equipment.

According to a first aspect of the invention, a method is provided for tuning a power oscillation damping unit in a power transmission system comprises the steps of: generating at least one probing signal,

sending the probing signal into the power transmission system,

receiving probing signal responses from measurement units placed in the power transmission system,

determining system model parameters for the power transmission system based on the probing signal and the probing signal responses, and

tuning the power oscillation damping unit using the system model parameters.

According to a second aspect of the present invention a power control device for tuning a power oscillation damping unit in a power transmission system is provided. The power control device comprises a tuning unit, which in turn comprises

a probing signal generating element configured to generate at least one probing signal and send the probing signal into the power transmission system,

a data extracting element configured to receive probing signal responses from measurement units placed in the power transmission system, and

a system parameter determining element configured to determine system model parameters for the power transmission system based on the probing signal and the probing signal responses, and tune the power oscillation damping unit using the system model parameters.

According to a third aspect of the present invention there is provided a computer program for tuning a power oscillation damping unit in a power transmission system. The computer program being loadable into an internal memory of a power control device and comprises computer program code means to make the power control device, when the program is loaded in the internal memory,

generate at least one probing signal,

send the probing signal into the power transmission system,

receive probing signal responses from measurement units placed in the power transmission system,

determine system model parameters for the power transmission system based on the probing signal and the probing signal responses, and

tune the power oscillation damping unit using the system model parameters.

The invention according to these aspects has the advantage of allowing tuning of a power oscillation damping unit for more efficient damping of inter area modes of oscillation. This is furthermore done automatically and without requiring any knowledge of the real model.

In one variation of the invention the system parameter determining element determines a change in system modal behaviour and only performs tuning if such a change has been determined.

In another variation of the invention the probing signal generating element sends the probing signal from the same positions in the system as where power oscillation damping control is performed by the power oscillation damping control unit.

In another variation of the invention there is a switchover control element that disables power oscillations damping by the power oscillations damping unit before the probing signal is sent and enables power oscillations damping by the power oscillation damping unit after tuning has been performed.

The probing signals may include a pulse train having a pulse repetition frequency set to correspond to the frequencies of inter area mode oscillations that may occur in the power transmission system. It may also include white noise.

According to another variation of the invention the system parameter determining element applies the probing signals and the probing signal responses on a set of equations including functions identifying relationships between system states, probing signal values and probing signal response value when determining system parameters. The functions may be linear functions or non-linear functions.

According to yet another variation of the invention the tuning unit detects an oscillation in the system, compares the amplitude of the oscillation with an oscillation threshold and disables tuning if this threshold is exceeded.

The tuning unit may furthermore start to perform tuning based on a detected tuning start condition.

BRIEF DESCRIPTION OF THE DRAWINGS

The subject matter of the invention will be explained in more detail in the following text with reference to preferred exemplary embodiments which are illustrated in the attached drawings, of which:

Fig. 1 schematically shows a number of measurement providing devices in a power transmission system being connected via a measurement aligning device to a power control device according to a first embodiment of the invention,

Fig. 2 schematically shows a flow chart outlining a number of method steps being performed in a method for tuning a power oscillation damping unit,

Fig. 3 shows the content of a data storing element in the power control device of the first embodiment in schematic form,

Fig. 4 schematically shows a number of measurement providing devices in a power transmission system being connected via a measurement aligning device to a power control device according to a second embodiment of the invention, and

Fig. 5 shows the content of the data storing element in the power control device of the second embodiment in schematic form.

DETAILED DESCRIPTION OF PREFERRED EMBODIMENTS

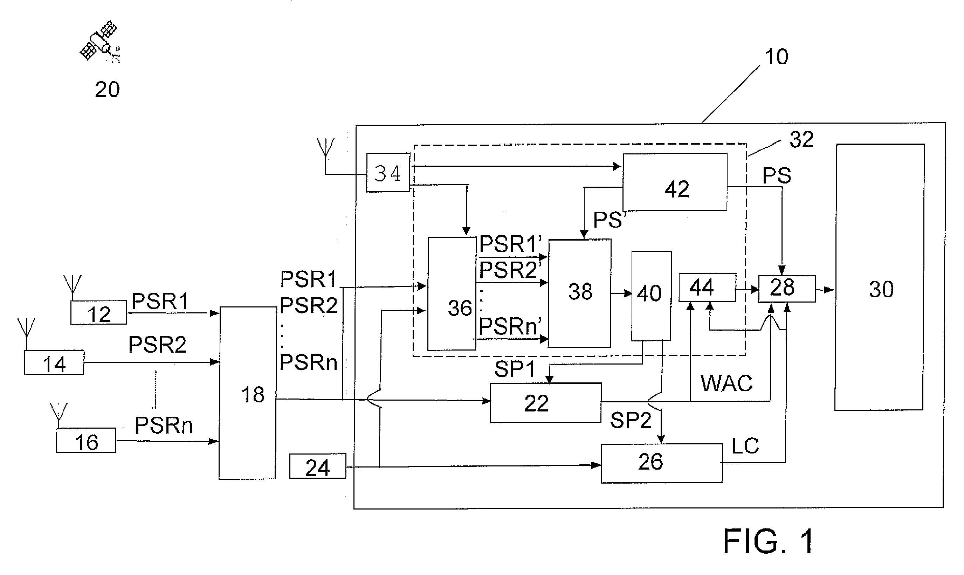

Fig. 1 schematically shows a power transmissions system in which a power control device 10 according to a first embodiment of the invention is provided. The power transmission system is preferably an AC power transmission system and then operating at a network frequency such as 50 or 60 Hz.

The power transmission system may be provided in a number of geographical areas. These areas are typically provided on great distances from each other, where one may as an example be provided in the south of Finland and another in the south of Norway. A geographical area can be considered as a coherent area. A coherent area is an area where a group of electrical machines, such as synchronous generators, are moving coherently, i.e. they are oscillating together. Such an area may also be considered as an electrical area, because the machines are close to each other in an electrical sense. In these geographical areas there are high-voltage tie lines for connecting geographically separated regions, medium-voltage lines, substations for transforming voltages and switching connections between lines as well as various buses in the local areas. Measurement devices are furthermore connected to such power lines and buses. The measurement devices may here be connected to measurement providing devices 12, 14 and 16 that may be Phasor Measurement Units (PMU). A PMU provides time-stamped local data about the system, in particular currents and voltage phasors. A plurality of phasor measurements collected throughout the network by PMUs and processed centrally can therefore provide a snapshot of the overall electrical state of the power transmission system. Such PMUs are normally also equipped with GPS clocks that synchronize themselves with reference clock devices in the form of GPS satellites 20 and will send measurement values, often in the form of phasors, such as positive sequence phasors, at equidistant points in time, e.g. every 20 ms. These measurements include measurement values of phasors that are time stamped, and a time stamp may represent the point in time when the phasor was measured in the system.

In fig. 1 there are generally n such measurement providing devices 12, 14 and 16 each providing phasors, where three phasors PSR1, PSR2 and PSRn are shown These measurement providing devices 12, 14 and 16 are in this example all PMUs that are in contact with a time generating device such as a GPS satellite 20. They furthermore measure phasors, time stamps the phasors and sends these in order for these phasors to be processed by the power control device 10. It should here be realized that there may be many more different measurement providing devices in the system in different geographical areas, where a geographical area normally corresponds to a separate group of machines swinging against a group of machines of another geographical area. In the figure only one GPS satellite is furthermore shown in order to exemplify the functioning of the present invention. It should however be realized that there may be several more satellites that various devices and units of the system listen to for tuning purposes.

In fig. 1 a first measurement providing device 12 is shown as sending a first measurement or phasor PSR1, typically a voltage phasor and or current phasor, a second measurement providing device 14 is shown as sending a second phasor PSR2 and an nth measurement providing device 16 is shown as sending an nth phasor PSRn. All these phasors are measured on-line and provided for the power control device 10. The phasors are thus obtained at distant geographical locations and time stamped by the measurement providing devices 12, 14 and 16, normally using a GPS clock, and sent via communication channels, which are potentially several thousand kilometers in length, to a measurement aligning device 18.

The measurement aligning device 18 may be a Phasor Data Concentrator (PDC) and receives the above-described measurements and synchronizes them, i.e. packages the phasors with the same time stamp.

A measurement aligning device 18 is to listen to measurement providing devices that are sending time stamped phasors on a regular basis (e.g. every 20 ms). The measurement aligning device 18 aligns the phasors according to the time stamp, expecting one measurement or phasor from each measurement providing device per time slot, and forwards all measurements when these corresponding to a given time slot are available.

The measurement aligning device 18 provides the time aligned measurements or phasors to the power control device 10. In normal operation the measurement aligning device 18 would provide measured phasors to a wide area power oscillations damping unit 22 that generates a wide area control signal WAC, which is provided to a switchover unit 28. The wide area power oscillation damping unit 22 may generate a modulation signal based on the wide area measurements from various geographical areas and provide this modulation signal or wide area control signal WAC to the switchover unit 28. In the power control device 10 there is also a local power oscillation damping unit 26 in parallel with the wide area power oscillation damping unit 22. The wide area power oscillation damping unit 22 can as an example for instance be a lead-lag power oscillation damping unit or a phasor power oscillation damping unit. The local power oscillation damping unit 26 receives local measurements, like power flow on a local transmission line or a locally derived frequency from a local measurement unit 24, which could employ either a PMU to calculate local power or to measure the line frequency or conventional sensors with current transformers and potential transformers. The local power oscillation damping unit 26 generates a modulation signal or a local control signal LC that is determined based on these local measurements and that is also provided to the switchover unit 28. The switchover unit 28 is furthermore connected to an actuator control unit 30, which in turn is connected to an actuator in the power transmission system, i.e. an element involved in the control of the power transmission system in which the measurement units 12, 14, 16 and 24, both local and remote, are provided. The actuator may as an example be a transformer in a FACTS system or a voltage source converter in an HVDC system. The wide area power oscillation damping unit 22 thus provides one feedback loop, while the local power oscillations damping unit 26 provides another feedback loop, where both loops are here provided for closed-loop power oscillation damping (POD), which is the same as damping of electromechanical oscillations caused by the above-mentioned swinging. The switchover unit 28 thus provides one of the modulation signals to the actuator control unit 30, which in turn adds this modulation signal to an actuator control signal in order to counteract power oscillations. The actuator control signal is then provided to the above-mentioned actuator (not shown) in the power transmission system. Here a switchover control element 44 may be provided for selecting which control signal WAC or LC that is to be provided to the actuator control unit 30. Normally the wide area control signal WAC should be provided. However, it is possible that the local signal is preferred in some instances, especially if the wide area measurements have been in reaching the wide area power oscillation damping unit 22. The damping is normally performed using damping parameters being set according to system parameters.

In order to determine the time of measurements, the power control device 10 is furthermore provided with a time keeping unit 34, which receives accurate time data from a time generating device such as the GPS satellite 20. This time keeping unit 34 is connected to a data extracting element 36 as well as to a probing signal generating element 42. The data extracting element 36 is also connected for receiving measurements PSR1, PSR2 and PSRn from the measurement aligning unit 18 as well as measurements from the local measurement unit 24. The data extracting element 36 is furthermore connected to a data storing element 38. This element may have the capability of calculating line active power signal from measured voltage and current phasors as supplied by PSR1, PSR2,..PSRn and stores these measurements and/or calculations. Also the probing signal generating element 42 is connected to the data storing element 38 for storing the probing signal PS therein. The probing signal generating element 42 is also connected to the switchover unit 28. A system parameter determining element 40 is furthermore connected to the data storing element 38 in order to fetch data from the data storing element 38 and determine system model parameters SP1 and SP2 which can be supplied to the wide area power oscillation damping unit 22 and the local power oscillation damping unit 26, respectively. Here the switchover control element 44 listens to the output WAC of the wide area power oscillation damping unit 22 and/or the output LC of the local power oscillation damping unit 26 and controls the switchover unit 28 based on these signals. The control may be based on when a power oscillation damping unit is to be tuned as well as perhaps on some other system conditions, like the delay with which measurements are received, which will be described in more detail later. It should here be realized that both the wide area power oscillation damping unit and the probing signal generating element 42 may provide control signals and probing signals to other actuating control units controlling other actuators in the power transmission system.

The switchover control element 44, data extracting element 36, data storing element 38, probing signal generating element 42 and system parameter determining element 40 do according to the first embodiment of the invention together make up a tuning unit 32. It should here be realized that in some variations of the invention the switchover unit 28 is also a part of the tuning unit 32. It is furthermore possible that also the time keeping unit 34 is a part of the tuning unit 32. It can here furthermore be mentioned that the switchover control element 44 in this embodiment does include switchover control functions in order to switch between local power oscillation damping and wide area power oscillation damping. This control functionality could as an alternative be provided in a separate switchover control element or as a part of another element or unit, such as one of the power oscillation damping units, for instance the wide area power oscillation damping unit 22.

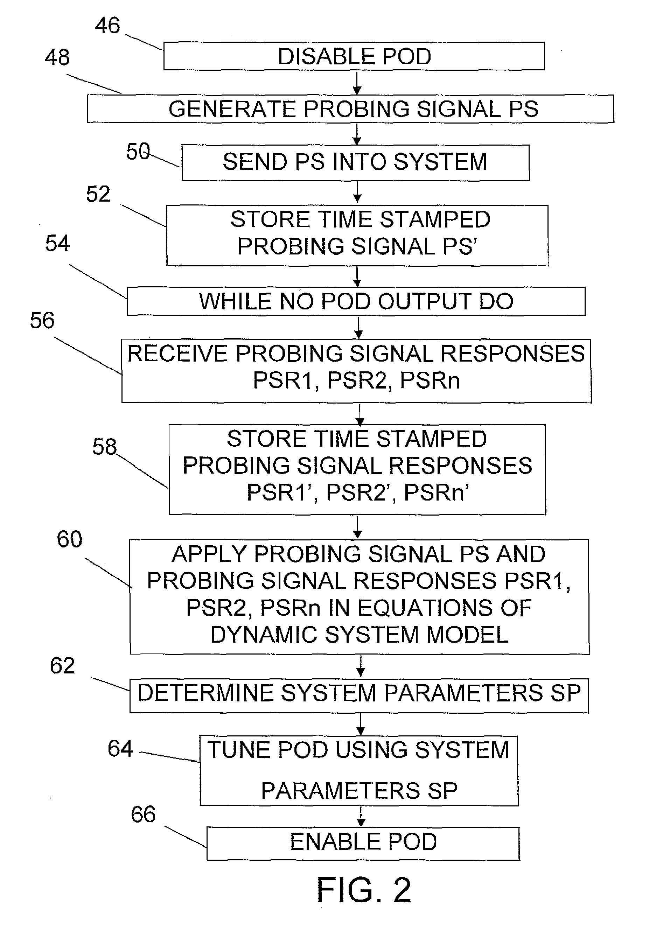

The first embodiment of the present invention will now be described in more detail with reference also being made to fig. 2, which schematically shows a flow chart outlining a number of method steps being performed in a method for tuning a power oscillation damping unit.

A power transmission system is not a fixed entity. It changes over time. This means that power oscillation damping units having efficient performance for a particular operating condition may be less effective in a new operating condition. In order to change the damping units for contributing to system stability when there is a new operating condition, they may need to be tuned. A new operating condition can involve a change in power generation and/or a change in load (nature and pattern). However, it may also involva a change in network configuration. This tuning could be done using extensive knowledge of the particular power transmission system and/or a static mathematical model capturing the dynamics of the system.

However, even if such knowledge and such a model exist for a specific transmission system, tuning may still not be easy to perform. One reason is that several power transmission systems may be interconnected and each of those could influence each other. This means that even if an operator who is in charge of one system has such extensive knowledge of his own system, he does in most case not have the corresponding knowledge of the other systems.

The present invention is directed towards improving on this situation. The present invention is thus directed towards tuning a power oscillation damping unit. Such tuning will now mainly be described in relation to the wide area power oscillation damping unit 22. It should however be realized that the method can also be performed on the local power oscillation damping unit 26 as is indicated in fig. 1.

The method may be initiated or started through manual activation, for instance through an operator pushing a button. It may also be initiated or started automatically, like at recurring intervals or based on the detection of system measurement discrepancies. As the method is initiated, the power transmission system with power oscillation damping units may furthermore be in operation. The system may thus be in the process of delivering electrical power and the power oscillation damping units be in the process of detecting and damping oscillations.

The method is therefore started or initiated by such an activation. What happens first is here that the switchover control element 44 controls the switchover unit 28 so that control signals, wide area or local control signals if present, cannot reach intended actuator control units and that instead the probing signal generating element 42 is connected to the switchover unit 28. This means that in the first embodiment the wide area control signal WAC or local control signal LC cannot reach the actuator control units 30. The switchover control element 44 of the tuning unit 32 thus disables power oscillation damping (POD), step 46, which in the first embodiment involves disconnecting the wide area power oscillation damping unit 22 and the local power oscillation damping unit 26. Thereafter the probing signal generating element 42 generates at least one probing signal PS, step 48. This signal may be a probing signal that is recurring. It may be provided as a pulse train having a pulse repetition frequency set to correspond to the frequencies expected at inter area mode oscillations This in order to be able to excite the frequencies at which inter area modes of oscillation may occur. As mentioned above these oscillations often occur at frequencies at or below 1 Hz for systems operating at frequencies of 50 - 60 Hz. Therefore such pulse repetition frequency may with advantage be set at about 1 Hz, which is at or slightly above the frequencies to be excited. This train may thus include pulses for instance provided during a pre-determined probing signal window. That may be 1 to 2 seconds wide. As an example this window can be of about one minute or 60 seconds. The probing signal may also include white noise. Also the pulse lengths may be selected to have oscillation excitation characteristics.

The probing signal PS is then provided to the actuator control unit 30, which modulates the probing signal onto a control signal used to control the actuator. In this way the probing signal PS is sent into the power transmission system, step 50. As can be seen in fig. 1, the probing signal is modulated onto the control signal used to control the same actuator as the wide area power oscillation damping unit 22 or local damping unit 26 send the wide area control signal WAC or local control signal LAC to. The probing signal PS is thus sent from the same position in the power transmission system from where power oscillation damping control is performed by the power oscillation damping control unit 22. The probing signal generating element 42 also time stamps the probing signal pulses using time values received from the time keeping unit 34 and stores the time stamped probing signal PS' in the data storing element 38, step 52.

As the probing signal is being sent, the switchover control element 44 monitors the control signal output of power oscillation damping units and here from the wide area power oscillation damping unit 22 and/or the local power oscillation damping unit 26 and allows the following methods steps described below as long as there is no power oscillations damping (POD) output, step 54, i.e. while there is no wide area power oscillation damping control signal WAC and/or local power oscillation damping signal LAC. However, if there is such a wide area power oscillation damping control signal WAC or local power oscillation damping signal LAC, the probing is immediately aborted and the switchover unit 28 controlled to supply the wide area power oscillation damping control signal WAC from the wide area power oscillation damping unit 22 or local damping signal LAC from local damping control unit 26 to the actuator control unit 30. Both the wide area power oscillation damping unit 22 and local power oscillation damping unit 26 may be arranged to detect if there is an oscillation in the system, compare the amplitude of the oscillation with an oscillation threshold and provide a damping signal if this threshold is exceeded. Through the providing of a damping signal it is clear that the threshold has been exceeded. The switchover control unit 44 thus disables tuning if this threshold is exceeded. It should here be realized that as an alternative the tuning unit 32 could have one or more elements of its own that detects oscillations, compares the amplitudes of these oscillations with a threshold and provides an oscillation indication signal if the threshold is exceeded.

If there is no power oscillation damping (POD), step 54, i.e. if there is no wide area control signal WAC or local control signal LAC, then the method continues. The method more particularly continues through the data extracting element 36 receiving measurements in the form of probing signal responses PSR1, PSR2 .... PSRn from the measurement units 12, 14 and 16, step 56, which measurement units thus are those ordinarily used when performing power oscillation damping. These measurement units are thus a part of the system framework used for power oscillation damping. The probing signal responses are received by the data extracting element 36 after being collected by the measurement aligning unit 18. Thereafter the data extracting element time stamps the probing signal responses PSR1, PSR2, PSRn with time values received from the time keeping unit 34 and stores them as time stamped probing signal responses PSR1', PSR2' and PSRn' in the data storing element 38 together with the corresponding probing signal PS' that caused them, step 58. An association is determined through investigating the time stamps of the pulses and of the responses. Here it is also possible to use knowledge about time delays through the system.

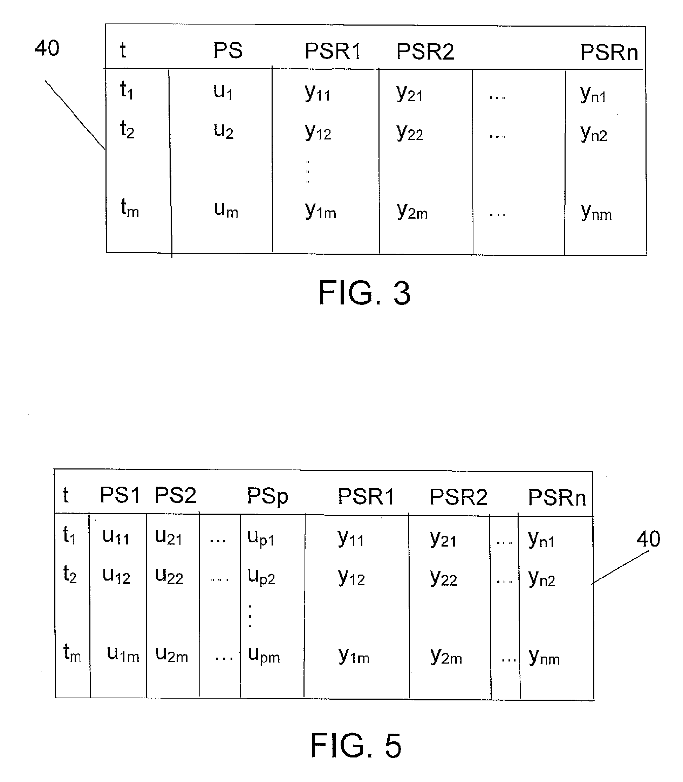

The storing is exemplified in fig. 3, which shows the content of the data storing element 40 in a schematic form for the probing signal and measurements of the first embodiment. The data extracting element 38 thus stores response data $y_{11}$ of a first probing signal response PSR1 from the first measurement unit 12, response data $y_{21}$ of a second probing signal response PSR2 from the second measurement unit 14 and response data $y_{n1}$ of an $n^{th}$ probing signal response PSRn from the $n^{th}$ measurement unit 16, where all these are associated with a first pulse $u_1$ of the probing signal PS sent at a first time $t_1$. The data extracting element 38 also stores response data $y_{12}$ of the first probing signal response PSR1, response data $y_{22}$ of the second probing signal response PSR2 and response data $y_{n2}$ of the $n^{th}$ probing signal response PSRn, where all these are associated with a second pulse $u_2$ of the probing signal PS sent at a second time $t_2$. This continues until a last received $m^{th}$ response data $y_{1m}$ of the first probing signal response PSR1, response data $y_{2m}$ of the second probing signal response PSR2 and response data $y_{nm}$ of an $n^{th}$ probing signal response PSRn, where all these are associated with a pulse $u_m$ and time $t_m$.

The probing signal PS and the responses PSR1, PSR2 ands PSRn are then applied in a set of system equations of an equivalent dynamic model of the power transmission system by the system parameter determining element 40, step 60. This means that the system model parameters are equivalent to the actual system parameters. It is here possible that an operator may be allowed to select the number q of states in the system. Alternatively it is possible that the parameter determining element 40 applies a default value on the number of states. The number q of states x may as an example be 50. The number of equations that are provided in a state space that is set is here dependent on the number of states selected or applied. The equations can here be non-linear equations or linear equations, which define the relationship between predicted pulse responses, states of the system, the pulses of the probing signal and actual measured responses. The functions thus identify relationships between system states, probing signal values and probing signal response values. The values of several different probing signal responses and several different probing signals may then be entered into these equations.

If there are n outputs or probing signal responses, q states and p inputs or probing signals, then the equations may be generally expressed as:

$$\hat{x}_{k+1} = F_1(\hat{x}_k) + F_2(\hat{u}_k) \tag{1}$$

$$\hat{y}_{k+1} = F_3(\hat{x}_k) + F_4(\hat{u}_k) \tag{2}$$

where, k is a current instance in time being examined $\hat{y}_{k+1}$ is a predicted response vector with size n at an instance in time k+1, $x_k$ is state vector of size q at the instance in time k, $\hat{x}_{k+1}$ is a predicted state vector of size q at the instance in time k+1, $\hat{u}_k$ is a probing signal pulse vector of size p, $F_1(\hat{x}_k)$ and $F_3(\hat{x}_k)$ are matrices of size q x q and n x q, respectively, including functions of the states x at the instance in time k while $F_2(\hat{u}_k)$ and $F_4(\hat{u}_k)$ are matrices of size n x q and n x p with functions of probing signal pulses u at the instance in time k. Here the functions of these matrices can be non-linear but also linear.

In the first embodiment p = 1, which actually makes the probing signal pulse vector $\hat{u}_k$ into a variable and the

matrices $F_2(\hat{u}_k)$ and $F_4(\hat{u}_k)$ into vectors. It can therefore be seen that in this special case the equations define a single input multiple output (SIMO) system.

If the functions are linear, the equations can furthermore be simplified as:

$$\hat{x}_{k+1} = A * \hat{x}_k + B * \hat{u}_k \qquad (3)$$

$$\hat{y}_{k+1} = C * \hat{x}_k + D * \hat{u}_k \qquad (4)$$

where A, B, C and D are matrices with desirable system constants of the model In the first embodiment of the invention B and D are actually vectors.

The probing signal pulses and probing signal pulse responses are here entered into theses equations for each time value k, the predicted responses are then compared with the actually received responses and the coefficients of the functions or matrices recursively changed for minimising the differences between received and predicted responses. This means that the probing signal provided during the above-mentioned time window will provide coefficients of the space state model that characterises or estimates the power transmission system. In this way a stable set of coefficients are obtained.

In a section entitled Model Identification of the article "Towards Real-time Implementation of Adaptive Damping Controllers for FACTS Devices" by P. Korba, M. Larsson, B. Chaudhuri, B. Pal, R. Majumder, R. Sadikovic and G. Andersson in IEEE Power Engineering Society General Meeting, 2007, which is herein incorporated by reference, a single input single output system model identification is used. The present invention thus expands the teachings of this document for application in a multi input multi output state space system or even a non linear system representations.

The coefficients, which make up a set of system model parameters SP, are then to be used to tune the wide area power oscillation damping unit, i.e. they are used for tuning a gain or attenuation of the power oscillation damping unit 22. The equivalent system model parameters SP are thus used for tuning a power oscillation damping unit (POD), step 64. In this first embodiment such system model parameters SP1 may be applied on the wide area power oscillation damping unit 22 by the system parameter determining element 40 and/or system model parameters SP2 may be applied on the wide area power oscillation damping unit 22 by the system parameter determining element 40 . This tuning may involve changing damping unit parameters based on the equivalent system model parameters. It may more specifically involve changing damping unit parameters based on the change in system model parameters. When damping unit parameters are changed based on a change in equivalent system model parameters or system modal behaviour, tuning may only be performed if such a change in system model parameters or a system modal behaviour has been determined. This means that the system parameters SP are used for tuning the power oscillation damping unit, step 64, For a simple single input single output system model, this may involve applying the coefficients in a closed-loop transfer function including said system model and a gain/attenuation model of the power oscillation damping unit. The parameters of the power oscillation damping unit may then be set or tuned so that a desired damping is achieved.

After the power oscillation damping unit has been tuned, the switchover control element 44 controls the switchover unit 28 so that power oscillation damping (POD) is again enabled, step 66. This here means that the wide area power oscillation damping unit 22 is again connected to the actuator control unit 30. In this way power oscillation damping performed by the two power oscillation damping units is again enabled after the tuning has been performed. The damping performed by the power oscillation damping units may be lead-lag power oscillation damping or phasor based power oscillation damping, which are each known as such.

In this way it is possible to tune power oscillation damping units for more efficient damping of inter area modes of oscillation. This is furthermore done without requiring any knowledge of the real or actual system parameters. The tuning may be started through a detected tuning start condition. This condition may be an operator selecting to start a tuning. The condition may also be a time condition; like that a certain time has elapsed since the last tuning. Tuning may thus be performed recurrently in the system at given time periods. Another possible tuning start condition is that the above-mentioned system parameters have changed too much. Another condition may be a known system change. It is thus possible to compare measurements made by the measurement providing units with predicted measurement values for a given probing pulse and perform a re-tuning if the difference between them is above a difference threshold. It is here furthermore also possible that this comparison of the difference is combined with the time based tuning in that the comparison is only made at specific recurring times.

The above described system parameters were obtained through Kalman filtering. It is possible with other ways to obtain system parameters, such as through using subspace identification. The tuning was furthermore described as being provided in relation to the wide area power oscillating damping unit. It should also be realized that it may just as well be performed in relation to the local power oscillation damping unit, which is also indicated in fig. 1.

In the first embodiment there was only one probing signal sent to a single actuator control unit. It should here be realized that as an alternative it is possible that a probing signal may be sent simultaneously to different positions in the power transmission system, like for instance to p different actuator control units, each controlling a separate actuator. A second embodiment of the present invention addresses such a situation.

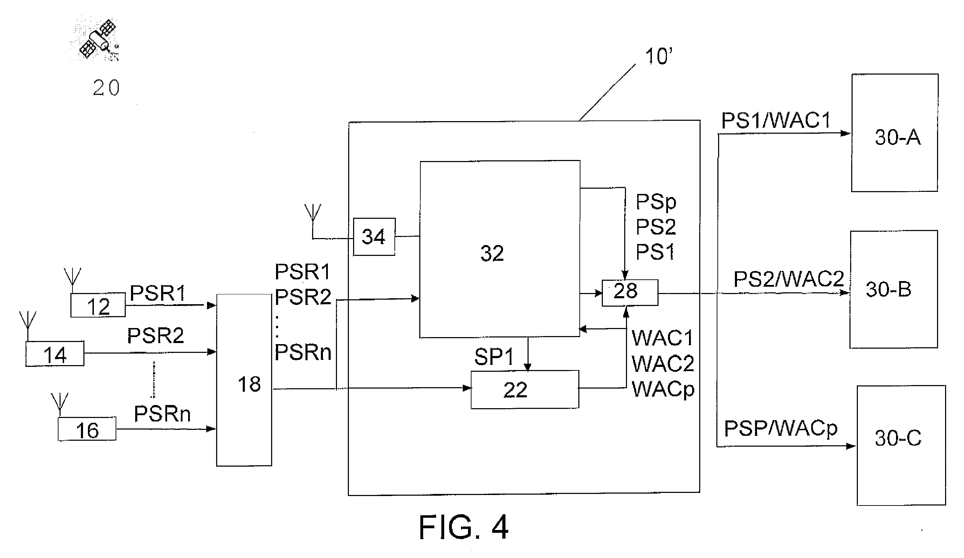

Fig. 4 schematically shows a system including a power control device 10' according to the second embodiment of the invention. In the system there are a number of measurement providing devices 12, 14 and 16 receiving accurate timing from a satellite 20 and communicating with a measurement aligning unit 18 in the same way as in the first embodiment. The measurement aligning unit 18 is also communicating with the power control device 10'. The power control device 10' according to this second embodiment includes a wide area power oscillation damping unit 22, time keeping unit 34, switchover unit 28 and tuning unit 32 as in the first embodiment, where the tuning unit 32 includes the same elements as the tuning unit of the first embodiment. However, the power control device 10' does not include any local power oscillation damping unit or actuator control unit. Instead the switchover unit 28 communicates with a first, second and $p^{th}$ actuator control unit 30A, 30B and 30C, each being associated with a separate actuator in the system. Here the wide area power oscillation damping unit 22 provides wide area control signals WAC1, WAC2 and WACp intended for actuator control units 30A, 30B and 30C, respectively.

In this case of multiple actuating devices the probing signal generating element of the tuning unit 32 will send out probing signals PS1, PS2, ... PSp to the actuators controlled by actuator control units 30A, 30B and 30C. As can be seen in fig. 4, the probing signals PS1, PS2 and PSp are thus sent from the same positions in the power transmission system from where power oscillation damping control is performed by the power oscillation damping control unit 22. In this variation of the invention the data extracting element stores the response data PRS1, PRS2 ... PSRn in the data storing element in the same way as in the first embodiment. However, here the responses are due to multiple probing signals PS1, PS2, ... PSp. Therefore the table in the data storing element 40 includes an additional number of columns compared with the first embodiment. If the number of probing signals is p, the number of additional columns is (p-1). This can be seen in fig. 5.

In this second embodiment the tuning unit applies the system equations in the more general form described above. The equations in this case therefore define a multiple input multiple output (MIMO) system.

The power control device 10 according to the invention was above described as including, the local time keeping unit, the local and wide area power oscillation damping units, the switchover unit and in the first embodiment also the actuator control unit. It should be realized that the power control device according to the present invention can include more units, like for instance the measurement aligning unit. It should also be realized that this unit may not be needed, especially in the case of local power oscillation damping. However, the power control device may also include fewer units. It is for instance possible to omit the switchover unit, time keeping unit and wide area power oscillation damping units. In its simplest form the power control device of the present invention only includes the tuning unit and the other units are provided as one or more separate entities in the system with which the tuning unit communicates.

It should also be realized that the switchover control element may include further control functionality. It may for instance be arranged to control switchover between the wide area and the local power oscillation damping units. It may in this case be arranged to switch over from wide area to local power oscillation damping if the time stamps of measurements at the time they reach the wide area power oscillation damping unit are above a maximum delay time limit,. This maximum delay time limit may be set according to how long it is possible to perform wide area power oscillation damping.

The power control device according to the invention may with advantage be provided in the form of one or more processors together with an internal memory including computer program code, which when being operated on by the processor performs the above mentioned power control device functionality. It will thus be apparent to the skilled man that the power control device of the present invention may be hardwired, such as provided in the form of discrete components providing the functional blocks depicted in fig. 1 or implemented as a computer program. Such a computer program may also be provided on a computer program product, such as one or more data carriers, like memory sticks or CD ROM disks, carrying the above mentioned computer program code.

In one variation the power control device may be run on a wide-area monitoring and control platform. In a further preferred embodiment, the power control device of the present invention may be run on a PMU.

The power control device of the present invention may thus be run in a control system for power electronics actuators e.g. FACTS, HVDC, PSS, generator excitation systems etc.

It should be realized that the present invention can be varied in a multitude of ways apart form hose described above. Therefore the present invention is only to be limited by the following claims.

**Claims**

1.  A method for tuning a power oscillation damping unit (22; 26) in a power transmission system, the method comprising the steps of:

    generating (48) at least one probing signal (PS; PS1, PS2, PSp),
    sending (50) the probing signal into the power transmission system,
    receiving (56) probing signal responses (PSR1, PSR2, PSRn) from measurement units (12, 14, 16) placed in the power transmission system,
    determining (60) system model parameters (SP1, SP2) for the power transmission system based on the probing signal and the probing signal responses, and
    tuning (62) the power oscillation damping unit using said system model parameters.

2.  A method according to claim 1, wherein the step of determining system model parameters comprises determining a change in system modal behaviour and the step of performing tuning is only performed if such a change has been determined.

3.  A method according to claim 1 or 2, wherein the step of sending the probing signal involves sending the probing signal from the same positions in the system as where power oscillation damping control is performed by the power oscillation damping control unit.

4.  A method according to any of claims 1 - 3 , further comprising the steps of disabling (46) power oscillations damping by the power oscillations damping unit before sending said probing signal and enabling (64) power oscillations damping by the power oscillation damping unit after performing tuning.

5.  A method according to any previous claim, wherein the probing signal includes a pulse train having a pulse repetition frequency set to correspond to the frequencies of inter area mode oscillations that may occur in the power transmission system.

6.  A method according to claim 5, wherein the probing signal includes white noise.

7.  A method according to any previous claim, wherein the step of determining system parameters includes applying the probing signal and the probing signal responses on a set of equations including functions identifying relationships between system states, probing signal values and probing signal response values.

8.  A method according to claim 7, wherein the functions are linear functions.

9.  A method according to claim 7, wherein the functions are non-linear functions.

10. A method according to any previous claim, further comprising the step of detecting an oscillation in the system, comparing the amplitude of the oscillation with an oscillation threshold and disabling tuning if this threshold is exceeded.

11. A method according to any previous claim, wherein the tuning is started to be performed based on a detected tuning start condition.

12. A power control device (10; 10') for tuning a power oscillation damping unit (22; 26) in a power transmission system, the device comprising:

    a tuning unit (42) comprising
    a probing signal generating element (42) configured to generate at least one probing signal (PS; PS1, PS2; PSp) and send the probing signal into the power transmission system,
    a data extracting element (36) configured to receive probing signal responses (PSR1, PSR2, PSRn) from measurement units (12, 14, 16) placed in the power transmission system, and
    a system parameter determining element (40) configured to determine system model parameters (SP1; SP2) for the power transmission system based on the probing signal and the probing signal responses, and tune the power oscillation damping unit using said system model parameters.

13. A device according to claim 12, wherein the system parameter determining element (40) when being configured to determine system parameters is configured to determine a change in system modal behaviour and to only perform tuning if such a change has been determined.

14. A device according to claim 12 or 13, wherein the probing signal generating element (42) when being configured to send the probing signal into the power transmission system is configured to send the probing signal from the same positions in the system as where power oscillation damping control is performed by the power oscillation damping control unit.

15. A device according to any of claims 12 - 14, further comprising a switchover control element (44) configured to disable power oscillations damping by the power oscillations damping unit before said probing signal is sent and to enable power oscillations damping by the power oscillation damping unit after tuning has been performed.

16. A device according to any of claims 12 - 15, wherein the system parameter determining element (40) when being configured to determine system parameters is further configured to apply the probing signal and the probing signal responses on a set of equations including functions identifying the relationships between the probing signal and probing signal responses .

17. A device according to any of claims 12 - 16, wherein the tuning unit is configured to disable tuning based on an oscillation being detected in the system, the amplitude of the oscillation being compared with an oscillation threshold and if this threshold being exceeded..

18. A device according to any of claims 12 - 17, wherein the tuning unit is configured to start to perform the tuning based on a detected tuning start condition.

19. A computer program for tuning a power oscillation damping unit (22; 26) in a power transmission system, the computer program being loadable into an internal memory of a power control device and comprises computer program code means to make the power control device, when said program is loaded in said internal memory, generate at least one probing signal (PS; PS1, PS2, PSp),
send the probing signal into the power transmission system,
receive probing signal responses (PSR1, PSR2, PSRn) from measurement units (12, 14, 16) placed in the power transmission system,
determine system model parameters (SP1, SP2) of the power transmission system based on the probing signal and the probing signal responses, and
tune the power oscillation damping unit using said system model parameters.

FIG. 1

```
┌──────────────────────────────┐
│          DISABLE POD         │   46
└──────────────────────────────┘
┌──────────────────────────────┐   48
│   GENERATE PROBING SIGNAL PS │
└──────────────────────────────┘
              │
              ▼
┌──────────────────────────────┐   50
│      SEND PS INTO SYSTEM     │
└──────────────────────────────┘
              │
              ▼
┌──────────────────────────────┐   52
│        STORE TIME STAMPED    │
│       PROBING SIGNAL PS'     │
└──────────────────────────────┘
              │
              ▼
┌──────────────────────────────┐   54
│     WHILE NO POD OUTPUT DO   │
└──────────────────────────────┘
              │
              ▼
┌──────────────────────────────┐   56
│  RECEIVE PROBING SIGNAL      │
│  RESPONSES PSR1, PSR2, PSRn  │
└──────────────────────────────┘
              │
              ▼
┌──────────────────────────────┐   58
│      STORE TIME STAMPED      │
│    PROBING SIGNAL RESPONSES  │
│     PSR1', PSR2', PSRn'      │
└──────────────────────────────┘
              │
              ▼
┌──────────────────────────────┐   60
│   APPLY PROBING SIGNAL PS AND│
│  PROBING SIGNAL RESPONSES    │
│  PSR1, PSR2, PSRn IN         │
│  EQUATIONS OF DYNAMIC SYSTEM │
│  MODEL                       │
└──────────────────────────────┘
              │
              ▼
┌──────────────────────────────┐   62
│ DETERMINE SYSTEM PARAMETERS SP│
└──────────────────────────────┘
              │
              ▼
┌──────────────────────────────┐   64
│   TUNE POD USING SYSTEM      │
│      PARAMETERS SP           │
└──────────────────────────────┘
              │
              ▼
┌──────────────────────────────┐   66
│          ENABLE POD          │
└──────────────────────────────┘
```

## FIG. 2

40

| t | PS | PSR1 | PSR2 | | PSRn |
|---|---|---|---|---|---|
| $t_1$ | $u_1$ | $y_{11}$ | $y_{21}$ | ... | $y_{n1}$ |
| $t_2$ | $u_2$ | $y_{12}$ | $y_{22}$ | ... | $y_{n2}$ |
| | | | $\vdots$ | | |
| $t_m$ | $u_m$ | $y_{1m}$ | $y_{2m}$ | ... | $y_{nm}$ |

## FIG. 3

| t | PS1 | PS2 | | PSp | PSR1 | PSR2 | | PSRn |
|---|---|---|---|---|---|---|---|---|
| $t_1$ | $u_{11}$ | $u_{21}$ | ... | $u_{p1}$ | $y_{11}$ | $y_{21}$ | ... | $y_{n1}$ |
| $t_2$ | $u_{12}$ | $u_{22}$ | ... | $u_{p2}$ | $y_{12}$ | $y_{22}$ | ... | $y_{n2}$ |
| | | | | $\vdots$ | | | | |
| $t_m$ | $u_{1m}$ | $u_{2m}$ | ... | $u_{pm}$ | $y_{1m}$ | $y_{2m}$ | ... | $y_{nm}$ |

40

## FIG. 5

FIG. 4

| | Europäisches Patentamt European Patent Office Office européen des brevets | **EUROPEAN SEARCH REPORT** | Application Number EP 09 17 6283 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | ZHOU N ET AL: "Electromechanical mode shape estimation based on transfer function identification using PMU measurements" POWER&ENERGY SOCIETY GENERAL MEETING, 2009. PES '09. IEEE, IEEE, PISCATAWAY, NJ, USA, 26 July 2009 (2009-07-26), pages 1-7, XP031538907 ISBN: 978-1-4244-4241-6 * the whole document * | 1-19 | INV. H02J3/24 |
| Y | WO 2008/116929 A2 (ABB RESEARCH LTD [CH]; KORBA PETR [CH]; LARSSON MATS [CH]) 2 October 2008 (2008-10-02) * abstract * * page 3 * | 1-19 | |
| A | EP 1 489 714 A1 (ABB RESEARCH LTD [CH]) 22 December 2004 (2004-12-22) * paragraph [0005] * | 1-19 | |
| Y | NING ZHOU ET AL: "Electromechanical Mode Online Estimation Using Regularized Robust RLS Methods" IEEE TRANSACTIONS ON POWER SYSTEMS, IEEE SERVICE CENTER, PISCATAWAY, NJ, US LNKD-DOI:10.1109/TPWRS.2008.2002173, vol. 23, no. 4, 1 November 2008 (2008-11-01), pages 1670-1680, XP011233970 ISSN: 0885-8950 * the whole document * | 1-19 | TECHNICAL FIELDS SEARCHED (IPC) H02J |

-/--

The present search report has been drawn up for all claims

| Place of search | Date of completion of the search | Examiner |
|---|---|---|
| Munich | 6 July 2010 | Krasser, Bernhard |

Europäisches
Patentamt

European
Patent Office

Office européen
des brevets

## EUROPEAN SEARCH REPORT

Application Number

EP 09 17 6283

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | NING ZHOU ET AL: "Initial results in power system identification from injected probing signals using a subspace method" POWER AND ENERGY SOCIETY GENERAL MEETING - CONVERSION AND DELIVERY OF ELECTRICAL ENERGY IN THE 21ST CENTURY, 2008 IEEE, IEEE, PISCATAWAY, NJ, USA, 20 July 2008 (2008-07-20), page 1, XP031304078 ISBN: 978-1-4244-1905-0 * abstract * ----- | 1-19 | |
| A | RUSEJLA SADIKOVIC ET AL: "Application of FACTS devices for damping of power system oscillations" POWER TECH, 2005 IEEE RUSSIA, IEEE, PISCATAWAY, NJ, USA, 27 June 2005 (2005-06-27), pages 1-6, XP031254797 ISBN: 978-5-93208-034-4 * the whole document * ----- | 1-19 | TECHNICAL FIELDS SEARCHED (IPC) |

The present search report has been drawn up for all claims

| Place of search | Date of completion of the search | Examiner |
|---|---|---|
| Munich | 6 July 2010 | Krasser, Bernhard |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 09 17 6283

This annex lists the patent family members relating to the patent documents cited in the above-mentioned European search report.
The members are as contained in the European Patent Office EDP file on
The European Patent Office is in no way liable for these particulars which are merely given for the purpose of information.

06-07-2010

| Patent document cited in search report | | Publication date | Patent family member(s) | | Publication date |
|---|---|---|---|---|---|
| WO 2008116929 | A2 | 02-10-2008 | CN | 101647173 A | 10-02-2010 |
| | | | EP | 2140533 A2 | 06-01-2010 |
| | | | US | 2010023179 A1 | 28-01-2010 |
| EP 1489714 | A1 | 22-12-2004 | AT | 382975 T | 15-01-2008 |
| | | | DE | 60318408 T2 | 29-01-2009 |
| | | | ES | 2299678 T3 | 01-06-2008 |
| | | | SI | 1489714 T1 | 30-06-2008 |
| | | | US | 2005187726 A1 | 25-08-2005 |

EPO FORM P0459

For more details about this annex : see Official Journal of the European Patent Office, No. 12/82

**EP 2 325 968 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 1489714 A

### Non-patent literature cited in the description

- **R. Sadikovic et al.** Application of FACTS Devices for Damping of Power System Oscillations. *proceedings of the Power Tech conference,* 27 June 2005
- **N. Zhou ; J.W. Pierre ; J.F Hauer.** Initial Results in Power System Identification From Injected Probing Signals Using a Subspace Method. *IEEE Trans on Power Systems,* August 2006, vol. 21 (3
- **P. Korba ; M. Larsson ; B. Chaudhuri ; B. Pal ; R. Majumder ; R. Sadikovic ; G. Andersson.** Towards Real-time Implementation of Adaptive Damping Controllers for FACTS Devices. *IEEE Power Engineering Society General Meeting,* 2007